# EUROPEAN PATENT SPECIFICATION

(11) **EP 4 571 454 B1**
(45) Date of publication and mention of the grant of the patent: **22.04.2026**
(21) Application number: 24211741.4
(22) Date of filing: 08.11.2024
(51) Int. Cl.: G06F 1/16

(54) **ELECTRONIC DEVICE INCLUDING COVER**
ELEKTRONISCHE VORRICHTUNG MIT ABDECKUNG
DISPOSITIF ÉLECTRONIQUE COMPRENANT UN COUVERCLE

(30) Priority: 14.12.2023 JP 2023211047
(43) Date of publication of application: 18.06.2025
(73) Proprietor: CASIO COMPUTER CO., LTD., Tokyo 151-8543 (JP)
(72) Inventor: Yuki, Koji, Hamura-shi, Tokyo, 205-8555 (JP); Eguchi, Hiroki, Hamura-shi, Tokyo, 205-8555 (JP); Tozuka, Takumi, Hamura-shi, Tokyo, 205-8555 (JP)
(74) Representative: Grünecker Patent- und Rechtsanwälte PartG mbB

(56) References cited:
- JP-A- 2023 086 173
- JP-A- 2023 132 405
- US-B1- 8 072 749

## Description

### Technical Field

The present disclosure relates to an electronic device including a cover.

### Description of Related Art

Conventionally, there have been known covers protecting electronic devices such as scientific calculators. For example, Japanese Unexamined Patent Application Publication No. 2023-086173 discloses a cover that can be attached onto the back side of an electronic device main body as well as the front side thereof with a display and key operation unit. It also describes how the cover and the electronic device main body are fixed by an engaging part of the cover engaging with a stopper groove of the electronic device.

When such a cover as disclosed in JP2003086173A is to be detached from the electronic device main body, a user presses down (or pulls) an extending part where the engaging part of the cover is provided. Regarding this occasion, the cover is pressed at its center in the vertical direction toward the electronic device main body and is elastically deformed so that the engaging part of the cover is moved outward. Such deformation may change the ease of detachment of the engaging part of the cover from the stopper groove of the electronic device main body. Thus, when a gap between the electronic device main body and the cover attached thereto is not appropriate, it is difficult to appropriately adjust the ease of removal of the cover from the electronic device main body.

The present disclosure has been made in view of the above circumstance, and has a purpose of providing an electronic device including a cover which can appropriately adjust the ease of removal of the cover from an electronic device main body.

### Summary of the Invention

To achieve the aforementioned objective, the electronic device (100) according to claim 1 is proposed.

The present disclosure allows the ease of removal of the cover from the electronic device main body to be appropriate.

### Brief Description of Drawings

Fig. 1A shows a scientific calculator with a cover attached on its back;
Fig. 1B shows the scientific calculator with the cover attached on its front;
Fig. 2A is a back view of the scientific calculator;
Fig. 2B is a front view of the cover;
Fig. 3A is a cross-sectional view taken along a line IIIA- IIIA of Fig. 1A;
Fig. 3B is a cross-sectional view taken along a line IIIB- IIIB of Fig. 1B;
Fig. 4A is an enlarged view of a part IV A of Fig. 3A circled by a dash-dot line;
Fig. 4B is an enlarged view of a part IV B of Fig. 3A circled by a dash-dot line;
Fig. 5A is an enlarged view of a part V A of Fig. 3B circled by a dash-dot line;
Fig. 5B is an enlarged view of a part V B of Fig. 3B circled by a dash-dot line;
Fig. 6A is a cross-sectional view taken along a line VI A - VI A of Fig. 1A;
Fig. 6B is a cross-sectional view taken along a line VI B - VI B of Fig. 1A;
Fig. 7 is an enlarged view of a part VII of Fig. 6A circled by a dash-dot line;
Fig. 8A is an enlarged view of a part VIII A of Fig. 6B circled by a dash-dot line;
Fig. 8B is an enlarged view of a part VIII B of Fig. 6B circled by a dash-dot line;
Fig. 9A is a schematic cross-sectional view in an up-down direction of the scientific calculator, in a second state, with the cover on its back;
Fig. 9B is an enlarged view of a part IX B of Fig. 9A circled by a dash-dot line;
Fig. 9C is an enlarged view of a part IX C of Fig. 9A circled by a dash-dot line;
Fig. 10A is a schematic cross-sectional view in the up-down direction of the scientific calculator, in a second state, with the cover on its front;
Fig. 10B is an enlarged view of a part X B of Fig. 10A circled by a dash-dot line;
Fig. 10C is an enlarged view of a part X C of Fig. 10A circled by a dash-dot line;
Fig. 11A is a schematic cross-sectional view in a left-right direction of the scientific calculator, in a second state, with the cover on its back;
Fig. 11B is an enlarged view of a part XI B of Fig. 11A circled by a dash-dot line;
Fig. 12A is a schematic cross-sectional view in the left-right direction of the scientific calculator, in a second state, with the cover on its front;
Fig. 12B is an enlarged view of a part XII B of Fig. 12A circled by a dash-dot line; and
Fig. 12C is an enlarged view of a part XII C of Fig. 12A circled by a dash-dot line.

### Detailed Description

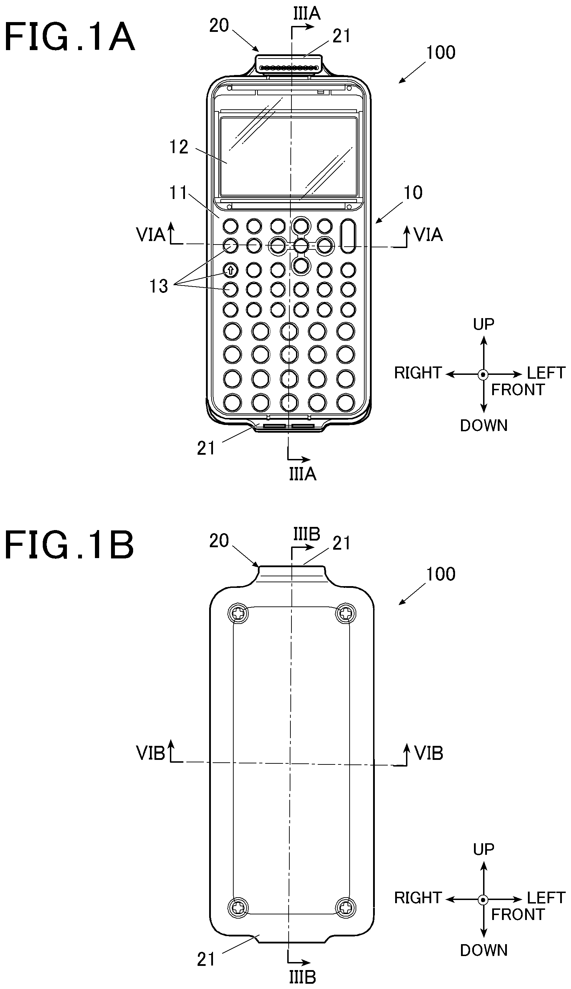

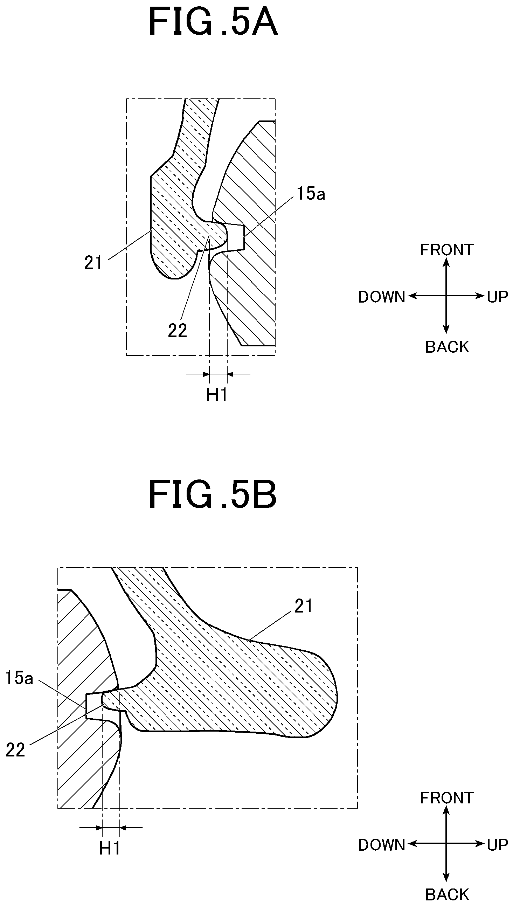

Hereinafter, one or more embodiments of the present disclosure will be described with reference to the Figs. 1 to 12C. The embodiment described below is provided with various limitations technically preferable for carrying out the present disclosure. However, the scope of the present disclosure is not limited to the embodiment below or illustrated examples.

As shown in Fig. 1A, an electronic device 100 according to the present embodiment includes a scientific calculator (electronic device main body) 10 and a cover 20. In the description given below, the directions of front, back, left, right, up, and down refer to the directions shown in the drawings. That is, the front-back direction refers to a direction of the front side to back side (thickness direction) of the scientific calculator 10 and the cover 20, the left-right direction refers to a width direction of the scientific calculator 10 and the cover 20, and the up-down direction refers to a longitudinal direction of the scientific calculator 10 and the cover 20. The cover 20 can be attached to both the front and back sides of the scientific calculator 10, but in the configuration of the cover 20 hereinafter described, the front-back orientation of the cover 20 is as the cover 20 is attached onto the back side of the scientific calculator 10 as shown in Fig. 1A, unless otherwise specified.

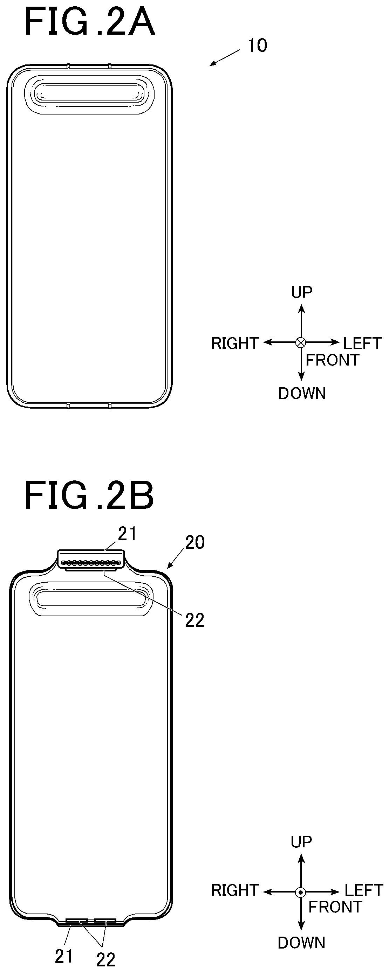

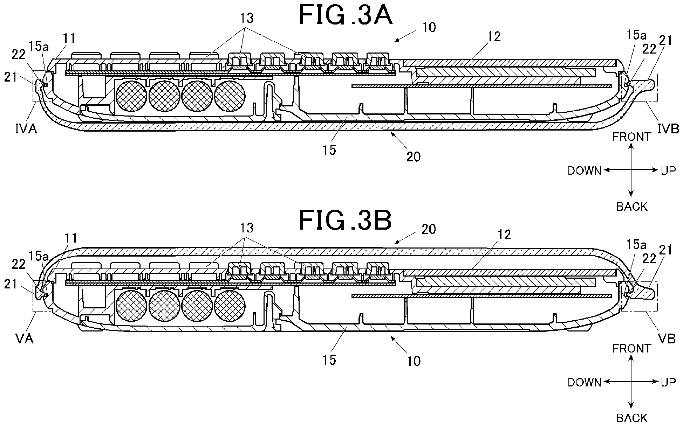

As shown in Figs. 1A and 2A, the scientific calculator 10 is an example of the electronic device main body according to the present disclosure, and is formed in a rectangular plate shape elongated in the up-down direction. The scientific calculator 10 includes a front case 11 covering the front face and a back case 15 covering the back face, as shown in Figs. 3A and 3B. The front case 11 and the back case 15 engage with each other in the front-back direction to form the housing of the scientific calculator 10. The front case 11 and the back case 15 are fastened with multiple screws (not shown in the drawings), for example. A display screen 12 on which various kinds of information are displayed and multiple operation buttons 13 with which user operations are input are provided on the front case 11.

The cover 20 covers and protects the main face (front face or back face) of the scientific calculator 10. As shown in Figs. 1B and 2B, the cover 20 is in a shape corresponding to the front-view shape of the scientific calculator 10, that is, in a rectangular plate shape elongated in the up-down direction corresponding to the longitudinal direction of the scientific calculator 10. The cover 20 is made of, for example, acrylonitrile butadiene styrene (ABS) resin. The periphery of the cover 20 curves forward to cover the periphery of the scientific calculator 10 when attached thereto.

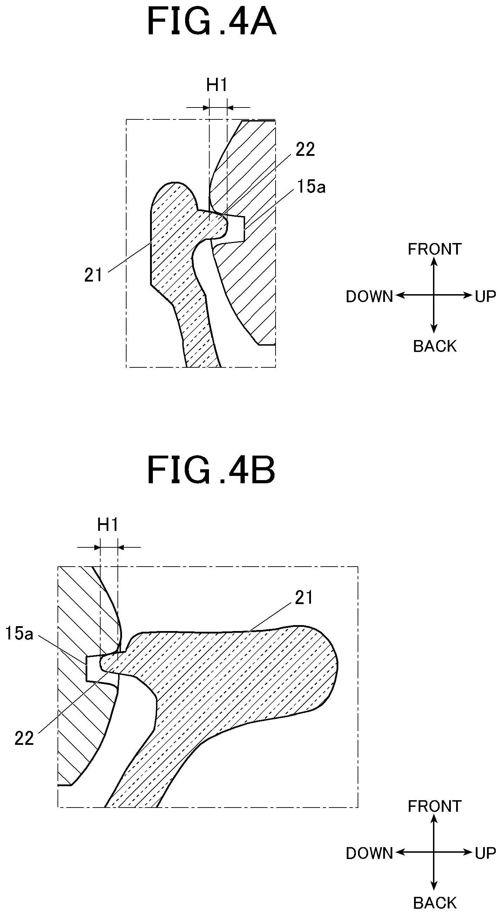

Extending parts 21 that curve forward and extend outward more than the other part of the periphery of the cover 20 are provided respectively at the upper and lower ends of the cover 20. The extending parts 21 cover at least part of the side faces (lateral faces) of the upper and lower ends of the housing (the back case 15) of the scientific calculator 10, as shown in Fig. 3. At the end of each of the extending parts 21, an engaging part 22 that protrudes toward the center of the cover 20 in the up-down direction is provided. As shown in Fig. 4A to 5B, the engaging parts 22 can engage with stopping grooves 15a (stopper) from both the front and back sides. The stopping grooves 15a are formed on the upper and lower end faces of the housing (the back case 15) of the scientific calculator 10. Thus, the cover 20 can be attached onto each of the front and back sides of the scientific calculator 10 by reversing the orientation in the front-back direction. In the present embodiment, the engaging parts 22 have a protruding shape and the stopping grooves 15a (stopper) have a groove shape. But their shapes are not limited to these. The engaging parts may have a groove shape and the stoppers may have a protruding shape.

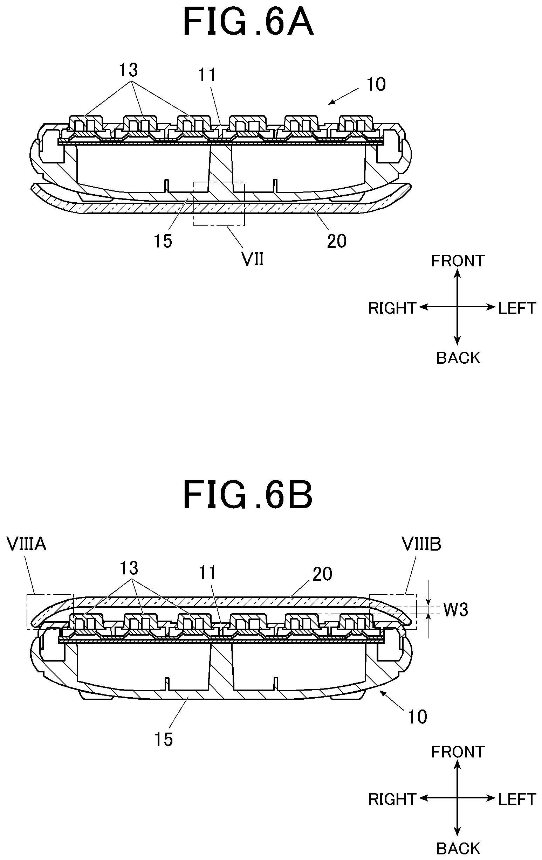

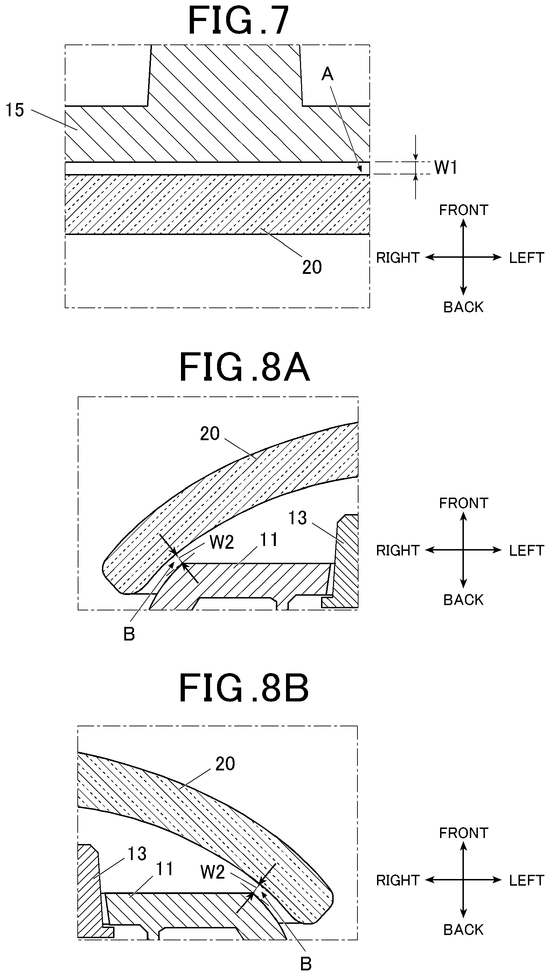

As shown in Figs. 3A, 3B, 6A, and 6B, the cover 20 can be placed selectively on both the front and back sides of the scientific calculator 10, and in the first state, the engaging parts 22 are engaged with the stopping grooves 15a while the cover 20 is not elastically deformed by being pressed. As shown in Figs. 4A to 5B, an amount of engagement of the engaging part 22 and the stopping groove 15a in the first state is a first engagement amount H1. The engagement amount is substantially equal between when the cover 20 is attached onto the front side of the scientific calculator 10 and when it is attached onto the back side, and the average value thereof is 1.0 mm (Here, "substantially equal" means that a difference between each of the engagement amounts and the average value thereof is 40% or less (more preferably 20 % or less.)). As shown in Figs. 6A and 7, a first gap A with a distance W1 is formed between the cover 20 and the back case 15 at the central part in the up-down and left-right directions when the cover 20 is attached onto the back side of the scientific calculator 10 in the first state (a position where the distance of the gap between the cover 20 and the scientific calculator 10 is smallest). The distance W1 of the first gap A is 0.1 mm or more and 1.2 mm or less, and preferably 0.2 mm or more and 0.9 mm or less.

As shown in Figs. 6B, 8A, and 8B, a second gap B with a distance W2 is formed between the cover 20 and the front case 11 at the central part in the up-down direction at both ends in the left-right direction (a position where the distance of the gap between the cover 20 and the scientific calculator 10 is smallest) when the cover 20 is attached onto the front side of the scientific calculator 10 in the first state. The distance W2 of the second gap B is in a first range, which is 0.1 mm or more and 1.2 mm or less, and preferably 0.2 mm or more and 0.9 mm or less, specifically. In the present embodiment, the distances W1 and W2 are substantially equal (Here, "substantially equal" means that a difference between the distances W1 and W2 is 0.9 mm or less (more preferably 0.5 mm or less), or a difference between each of the distances W1 and W2 and the average value thereof is 80% or less (more preferably 50% or less.)). As shown in Figs. 6B, 8A, and 8B, the distance W2 of the second gap B when the cover 20 is attached onto the front side of the scientific calculator 10 in the first state is the smallest between the cover 20 and the peripheral part where the operation buttons 13 are not disposed on the housing of the scientific calculator 10 (the front case 11). A distance W3, the smallest distance between the front face of the operation buttons 13 not pressed and the cover 20 is in a second range, which is greater than the distance W2 and equal to or smaller than 2.5 mm, specifically. More preferably, the distance W3 is greater than the distance W2 by 0.8 mm and is equal to or smaller than 2.0 mm.

Next described is how the distance of the gap between the cover 20 and the scientific calculator 10 is determined. If the cover 20 and the scientific calculator 10 are in contact at other parts than the ends in the up-down direction where the stopping grooves 15a and the engaging parts 22 are provided when the cover 20 is attached onto the front or back side of the scientific calculator 10, the surface of the scientific calculator 10 might be damaged over time. Therefore a gap is provided between the cover 20 and the scientific calculator 10. The necessary distance of the gap is 0.1 mm or more, and preferably 0.2 mm or more considering tolerances of design variables.

When a user of the electronic device 100 presses down (or pulls) the extending parts 21 where the engaging parts 22 of the cover 20 are provided to remove the cover 20 from the scientific calculator 10, the user may press the cover 20 toward the scientific calculator 10 at the central part in the up-down direction. As the gap is formed between the cover 20 and the scientific calculator 10 as described above, the cover 20 is elastically deformed in response to the pressure, and the engaging parts 22 of the cover 20 are thereby moved outward. In this occasion, as the engagement of the stopping groove 15a and the engaging part 22 gets smaller, the force of pressing (pulling) the extending part 21 required to detach the engaging part 22 from the stopping groove 15a is alleviated (the cover can be removed more easily).

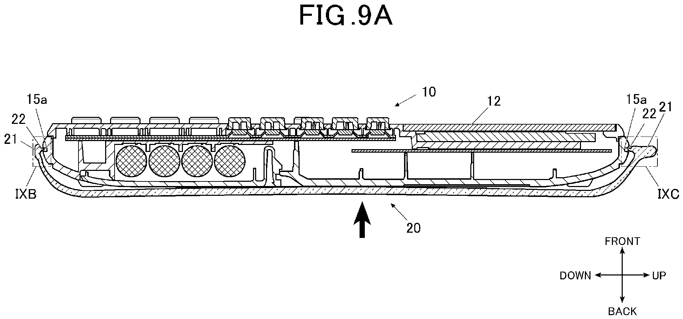

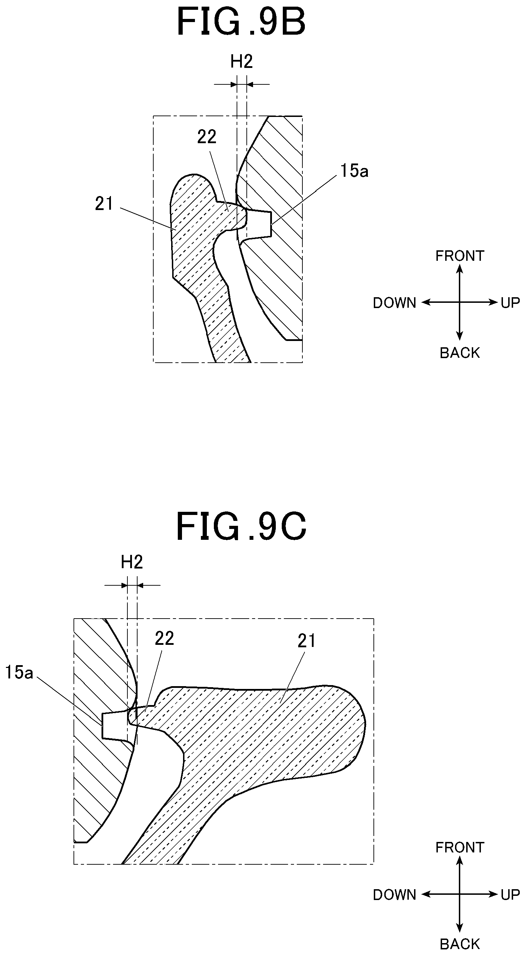

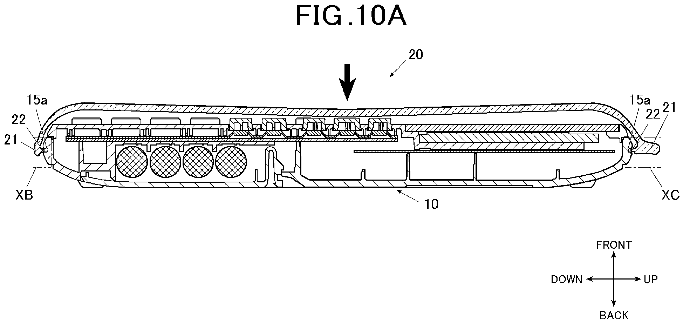

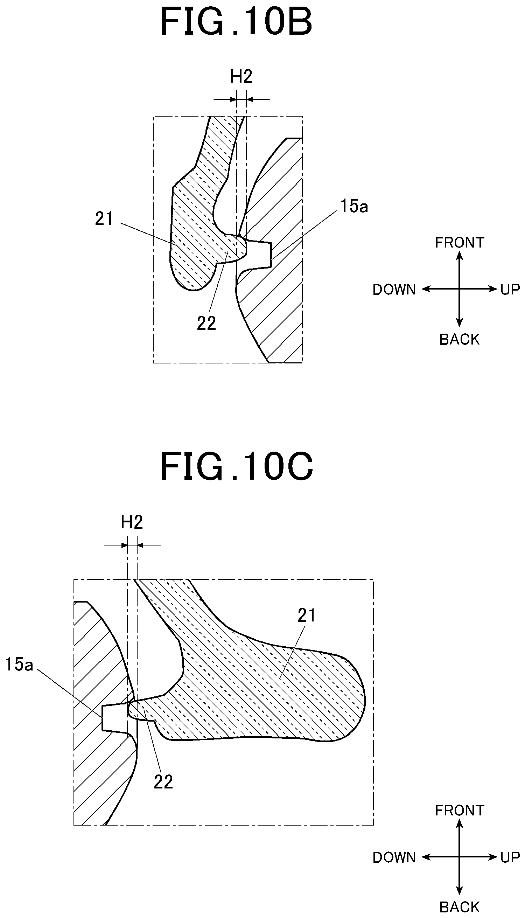

As shown in Figs. 9A to 12C, in the second state, the cover 20 is pressed toward the scientific calculator 10 at the central part in the up-down direction from the first state and is thereby elastically deformed. As shown in Figs. 9B, 9C, 10B, and 10C, the engagement amount of the engaging part 22 and the stopping groove 15a in the second state is a second engagement amount H2, which is smaller than the first engagement amount H1. The engagement amount is substantially equal between when the cover 20 is attached onto the front side of the scientific calculator 10 and when it is attached onto the back side, and the average value thereof is 0.93 mm (Here, "substantially equal" means that a difference between each of the engagement amounts and the average value thereof is 40% or less (more preferably 20 % or less.)). That is, the second engagement amount H2 is a front-attachment engagement amount, which is an engagement amount between the engaging part 22 and the stopping groove 15a when the cover 20 is elastically deformed so that the central part in the longitudinal direction of the cover 20 is in contact with the scientific calculator 10 in the second state while the cover 20 is attached onto the front side of the scientific calculator 10, and the second engagement amount H2 is also a back-attachment engagement amount, which is an engagement amount between the engaging part 22 and the stopping groove 15a when the cover 20 is elastically deformed so that the central part in the longitudinal direction of the cover 20 is in contact with the scientific calculator 10 in the second state while the cover 20 is attached onto the back side of the scientific calculator 10. The shape of the scientific calculator 10, the position of the stopping groove 15a, the shape of the cover 20 and the position of the engaging part 22 are determined so that the front-attachment engagement amount and the back-attachment engagement amount are substantially equal.

However, when the second engagement amount H2 in the second state gets smaller than expected, the engagement force gets unstable. The cover 20 may thereby be removed too easily when being pressed toward the scientific calculator 10. In that case, when the cover 20 is pressed toward the scientific calculator 10 unintentionally when it is being carried around, for example, the cover 20 may be removed from the scientific calculator 10, which is undesirable. Therefore, the ratio of the second engagement amount H2 to the first engagement amount H1 is to be in a range of 30% or more and 95% or less, and the distance W1 of the first gap A or the distance W2 of the second gap B is to be 1.2 mm or less. When it is more important to stably attach the cover 20 to the scientific calculator 10 than to easily remove the cover 20, the ratio of the second engagement amount H2 to the first engagement amount H1 may be 50% or more, or the distance W1 of the first gap A and the distance W2 of the second gap B may be 0.9 mm or less. When it is more important to easily remove the cover 20 using the gap between the cover 20 and the scientific calculator 10, the ratio of the second engagement amount H2 to the first engagement amount H1 may be 80% or less, and the distance W1 of the first gap A or the distance W2 of the second gap B may be 0.2 mm or more, because, with the distance W1 of the first gap A or the distance W2 of the second gap B being small, the amount of deflection is not sufficient at the time of elastic deformation of the cover 20 pressed toward the scientific calculator 10 and the degree of the ease of removal of the cover 20 is small.

If the difference between the distance W1 of the first gap A and the distance W2 of the second gap B is large, the ease of removal of the cover 20 is different between when the cover 20 is attached onto the front side of the scientific calculator 10 and when it is attached onto the back side of the scientific calculator 10. Therefore, the distance W1 of the first gap A and the distance W2 of the second gap B are to be substantially equal (Here, "substantially equal" means that a difference between the distance W1 and the distance W2 is a predetermined value or less, and for example, is 0.9 mm or less (more preferably 0.5 mm or less).) or the second engagement amount H2 is to be substantially equal between when the cover 20 is attached onto the front side of the scientific calculator 10 and when it is attached onto the back side of the scientific calculator 10 (Here, "substantially equal" means that a difference between each of the engagement amounts and the average value thereof is 40% or less (more preferably 20 % or less).) so that the ease of removal of the cover 20 is not significantly different between when the cover 20 is attached onto the front side of the scientific calculator 10 and when it is attached onto the back side of the scientific calculator 10.

The space-saving and designing of the electronic device 100 are taken into consideration as follows. When the distance W1 of the first gap A or the distance W2 of the second gap B is larger than 1.2 mm, meaning that the width (thickness) in the front-back direction of the electronic device 100 (the scientific calculator 10 with the cover 20 attached) increases, the space-saving and designing of the electronic device 100 are degraded. This solution is not preferable because the amount of deflection at the time of elastic deformation of the cover 20 pressed toward the scientific calculator 10 is too large, which may lead to the user discomfort or cause other problems. That is, as the distance W1 of the first gap A and the distance W2 of the second gap B is 0.1 mm or more (preferably 0.2 mm or more) and 1.2 mm or less (preferably 0.9 mm or less), the cover 20 can be stably attached to the scientific calculator 10 while the ease of removal of the cover 20 is improved. In other words, the distance W1 of the first gap A and/or the distance W2 of the second gap B are determined according to the conditions of the stability of attachment of the cover 20 to the electronic device main body (scientific calculator 10) and the ease of removal of the cover 20 from the electronic device main body (scientific calculator 10).

In conventional covers and scientific calculators, a distance formed between a scientific calculator and its cover when the cover is attached onto the back side of the scientific calculator is smaller than the distance W1 of the first gap A according to the present embodiment. Thus, the amount of deflection at the time of elastic deformation of a conventional cover pressed toward a scientific calculator is not sufficient, which makes it hard to remove the cover. Regarding this problem, the value of the distance of the first gap A according to the present embodiment is determined so that the cover 20 can be removed when the cover 20 is attached onto the back side of the scientific calculator 10 as described above. Moreover, the value of the distance of the first gap A according to the present embodiment is determined so that the cover 20 can be stably attached to the scientific calculator 10 as described above.

In conventional covers and scientific calculators, a cover which is attached onto the front side of a scientific calculator is removed, the cover and operation buttons provided on the front face of the scientific calculator may be brought into contact when the cover is pressed toward the scientific calculator at the central part in the up-down direction. In that case, when the cover is pressed toward the scientific calculator while the cover and the operation buttons are already in contact, the operation buttons are moved in the back direction adding a reaction force to the cover (the maximum stroke amount of the operation buttons is 0.6 mm to 1.0 mm.). Therefore, the force of pressing the cover and the force of deflection of elastic deformation of the cover are unstable, and the ease of removal of the cover is also unstable when the cover is attached onto the front side of the scientific calculator.

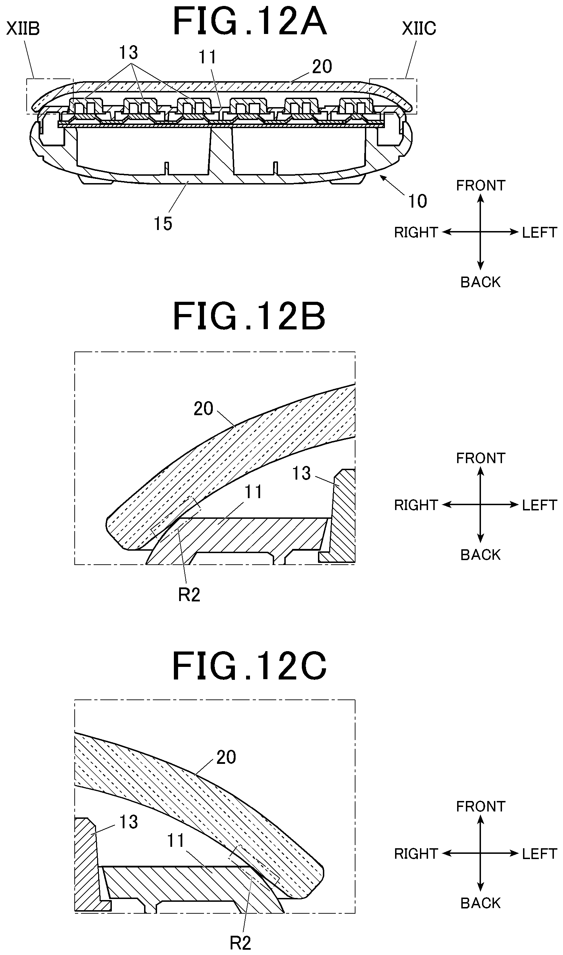

Regarding this problem, when the cover 20 is attached onto the front side of the scientific calculator 10 in the second state according to the present embodiment, the cover 20 and the scientific calculator 10 are brought into contact first in a region R2, the central part in the up-down direction at both ends in the left-right direction where the operation buttons 13 are not mounted, as shown in Figs. 12B and 12C. That is, when the cover 20 is attached onto the front side of the scientific calculator 10 in the second state according to the present embodiment, the cover 20 and the operation buttons 13 are not brought into contact first. Therefore, the ease of removal of the cover 20 when the cover 20 is attached onto the front side of the scientific calculator 10 can be stable.

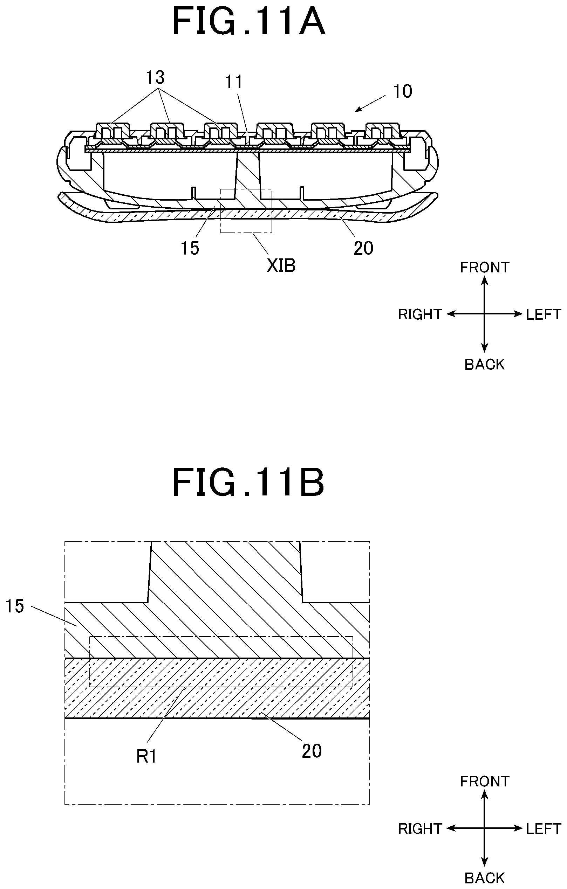

As shown in Fig. 11B, when the cover 20 is attached onto the back side of the scientific calculator 10 in the second state, the cover 20 and the scientific calculator 10 are in contact in the region R1, the central part in the up-down and the left-right directions.

As shown in Figs. 6A and 6B, the degree of curving at both ends in the left-right direction of the electronic device 10 is larger on the front side than on the back side and the degree of curving at both ends in the left-right direction of the cover 20 is equal to or smaller than the degree of curving at both ends in the left-right direction of the electronic device 10 on the back side. Thus, when the cover 20 is attached onto the front side of the scientific calculator 10 in the second state, the cover 20 can be in contact with the scientific calculator 10 in the region R2, the central part in the up-down direction at both ends in the left-right direction where the operation buttons 13 are not mounted, as shown in Figs. 12B and 12B, and when the cover 20 is attached onto the back side of the scientific calculator 10 in the second state, the cover 20 can be in contact with the scientific calculator 10 in the region R1, the central part in the up-down and the left-right directions, as shown in Figs. 11A and 11B.

In conventional covers and scientific calculators, the ease of removal of a cover is different between when the cover 20 is attached onto the front side of the scientific calculator 10 and when it is attached onto the back side of the scientific calculator 10 because the amount of deflection at the time of elastic deformation of the cover pressed toward the scientific calculator is different and the ease of removal of the cover is thereby unstable. Regarding this problem, the distance W1 of the first gap A and the distance W2 of the second gap B according to the present embodiment are substantially equal, and the difference between the distance W1 and the distance W2 is 0.9 mm or less (more preferably 0.5 mm or less). That is, the amount of deflection at the time of elastic deformation of the cover 20 pressed toward the scientific calculator 10 is unchanged between when the cover 20 is attached onto the back side of the scientific calculator 10 and when the cover 20 is attached onto the front side of the scientific calculator 10. Therefore, the ease of removal of the cover 20 is substantially equal between when the cover 20 is attached onto the back side of the scientific calculator 10 and when the cover 20 is attached onto the front side of the scientific calculator 10, and the ease of removal of the cover 20 is stable. In other words, the difference between the distance W1 of the first gap A and the distance W2 of the second gap B is determined according to the conditions of the difference between the ease of removal of the cover 20 attached on the front side of the electronic device main body (the scientific calculator 10) and the ease of removal of the cover 20 attached on the back side of the electronic device main body.

The electronic device 100 according to the embodiment above may satisfy at least one of the first condition, the second condition, and the third condition shown below. The first condition is that the cover 20 and the scientific calculator 10 are in contact in a region where the operation buttons 13 are not mounted when the cover 20 is attached onto the front side of the scientific calculator 10 in the second state as shown in Figs. 12B and 12C. The second condition is that the first gap A is formed between the cover 20 and the scientific calculator 10 at the central part in the up-down direction when the cover 20 is attached onto the back side of the scientific calculator 10 in the first state as shown in Fig. 7. The third condition is that the distance W1 of the first gap A is substantially equal as the distance W2 of the second gap B formed between the cover 20 and the scientific calculator 10 at the central part in the up-down direction when the cover 20 is attached onto the front side of the scientific calculator 10 in the first state. In this case, the ease of removal of the cover 20 from the scientific calculator 10 can also be appropriate.

The ease of removal of the cover 20 from the scientific calculator 10 depends on the shapes and hardness of the cover 20, the engaging parts 22, the front case 11, the back case 15, the stopping grooves 15a, and the like. In the embodiment described above, the distance W1 of the first gap A and the distance W2 of the second gap B are determined assuming that the scientific calculator 10 is in the shape and size of a standard scientific calculator (roughly a rectangular shape with: depth of 150 to 200 mm; width of 60 to 90 mm; and height of 10 to 20 mm) and that the material of the cover 20 is ABS resin (polystyrene (PS) or other materials may also be used as long as it has a Young's modulus similar to ABS resin), which is commonly used. However, on the contrary, at least one of the shape of the cover 20, the hardness of the cover 20, the shape of the housing of the scientific calculator 10 (the front case 11 and the back case 15), the hardness of the housing of the scientific calculator 10, the shape of the engaging parts 22, the hardness of the engaging parts 22, the shape of the stopping grooves 15a, and the hardness of the stopping grooves 15a may be determined based on the distance W1 of the first gap A and/or the distance W2 of the second gap B. In a case where the size of the electronic device as the target of application exemplified by the scientific calculator 10 is different, the distances of the gaps and the engagement amounts described above may be changed proportionally to the difference of the size.

### <Variations>

Next, the electronic device 100 according to a variation of the embodiment described above is described. The following description is given focusing on the differences from the electronic device 100 according to the above embodiment. The components similar to those of the electronic device 100 according to the above embodiment are described with the same reference signs and the descriptions thereof are omitted.

In this variation, when the cover 20 is attached onto the front side of the scientific calculator 10 in the second state as shown in Figs. 12A to 12C, the cover 20 and the scientific calculator 10 are brought into contact first in the region R2, the central part in the up-down direction at both ends in the left-right direction where the operation buttons 13 are not mounted. Next, when the cover 20 is pressed toward the scientific calculator 10 while the cover 20 and the scientific calculator 10 are in contact in the region R2, the cover 20 and the surface of the operation buttons 13 are brought into contact. However, as the cover 20 and the scientific calculator 10 are already in contact in the region R2 and the cover 20 is supported at the region R2, the surface of the operation buttons 13 are not easily damaged.

In addition, a rib or a protrusion may be provided on the face of the cover 20 on the side of the scientific calculator 10. In that case, when the cover 20 is attached onto the front side of the scientific calculator 10, the cover 20 can be prevented from being brought into contact with the operation buttons 13 as the rib or protrusion is in contact with the front case 11 in a region between the operation buttons 13.

As described hereinbefore, the electronic device 100 according to the present embodiment includes the electronic device main body (scientific calculator 10) and the cover 20. The electronic device main body (scientific calculator 10) has the stopper (stopping groove 15a) on both sides in the longitudinal direction, and the cover 20 can be attached to the electronic device main body (scientific calculator 10) selectively on front side or the back side and is provided with the engaging parts 22 that engage with the stoppers in the first state where there is a gap between the electronic device main body (scientific calculator 10) and the cover 20 in the central part in the longitudinal direction regardless of whether the cover 20 is attached onto the front side or the back side. In the electronic device 100, the amount of engagement of the engaging part 22 and the stopper 15 when the cover 20 is attached onto the front side of the electronic device main body 10 in the second state where the cover 20 is elastically deformed to be brought into contact with the electronic device main body 10 at the central part in the longitudinal direction of the cover 20 is defined as a front-side attachment engagement amount. The amount of engagement of the engaging part 22 and the stopper 15 when the cover is attached onto the back side of the electronic device main body in the second state where the cover 20 is elastically deformed to be brought into contact with the electronic device main body 10 at the central part in the longitudinal direction of the cover 20 is defined as a back-side attachment engagement amount. The shape of the electronic device main body and the positions of the stoppers 15 and the shape of the cover 20 and the positions of the engaging parts 22 are determined such that the front-side attachment engagement amount and the back-side attachment engagement amount are substantially equal. That is, the gap in the first state is determined so that the front-side attachment engagement amount and the back-side attachment engagement amount are substantially equal. Thus, the ease of removal of the cover 20 does not differ significantly between when the cover 20 is attached onto the front side of the scientific calculator 10 and when it is attached onto the back side. The ease of removal of the cover 20 from the scientific calculator 10 can thereby be appropriate.

The electronic device 100 according to the present embodiment includes the electronic device main body (scientific calculator 10) that includes multiple operation buttons 13 and the cover 20 that can be attached to the electronic device main body. The electronic device main body includes the stoppers 15 (stopping grooves 15a) respectively on both sides in the longitudinal direction thereof. The cover 20 includes the extending parts 21 that are respectively provided at both ends and that cover the side faces (lateral faces) of the electronic device main body at least partially and the engaging parts 22 that are provided at the tips of the extending parts 21 and that engage with the stoppers. In the first state, the engagement amount of the engaging part 22 and the stopper is the first engagement amount H1 when the cover 20 is attached onto the front side or the back side of the electronic device main body. In the second state when the cover 20 is pressed toward the electronic device main body at the central part in the longitudinal direction of the cover 20 from the first state, the engagement amount of the engaging part 22 and the stopper is the second engagement amount H2, which is smaller than the first engagement amount H1. The gap formed at the central part in the longitudinal direction between the cover 20 and the electronic device main body at a position where the gap is smallest when the cover 20 is attached onto the back side of the electronic device main body in the first state is defined as the first gap A, and the gap formed at the central part in the longitudinal direction between the cover 20 and the electronic device main body at a position where the gap is smallest when the cover 20 is attached onto the front side of the electronic device main body in the second state is defined as the second gap B. The distance W1 of the first gap is substantially equal to the distance W2 of the second gap B. As a result, the amount of deflection at the time of elastic deformation of the cover 20 pressed toward the scientific calculator 10 is unchanged between when the cover 20 is attached onto the back side of the scientific calculator 10 and when the cover 20 is attached onto the front side of the scientific calculator 10. Thus, the ease of removal of the cover 20 is substantially equal between when the cover 20 is attached onto the back side of the scientific calculator 10 and when the cover 20 is attached onto the front side of the scientific calculator 10, and the ease of removal of the cover 20 from the scientific calculator 10 can also be appropriate.

The electronic device 100 according to the present embodiment includes the electronic device main body (scientific calculator 10) that includes multiple operation buttons 13 and the cover 20 that can be attached to the electronic device main body. The electronic device main body includes the stoppers 15 (stopping grooves 15a) respectively on both sides in the longitudinal direction thereof. The cover 20 includes the extending parts 21 that are respectively provided at both ends and that cover the side faces (lateral faces) of the electronic device main body at least partially and the engaging parts 22 that are provided at the tips of the extending parts 21 and that engage with the stoppers. In the first state, the engagement amount of the engaging part 22 and the stopper is the first engagement amount H1 when the cover 20 is attached onto the front side or the back side of the electronic device main body. In the second state when the cover 20 is pressed toward the electronic device main body at the central part in the longitudinal direction of the cover 20 from the first state, the engagement amount of the engaging part 22 and the stopper is the second engagement amount H2, which is smaller than the first engagement amount H1. In the electronic device 100, the gap formed between the cover 20 and the electronic device main body at the central part in the longitudinal direction when the cover 20 is attached onto the front side of the electronic device main body in the first state is the narrowest in an area where the operation buttons 13 are not mounted. When the cover 20 is attached onto the front side of the electronic device main body 10 in the second state, the cover 20 is in contact with the electronic device main body in the area where the operation buttons 13 are not mounted, and the cover 20 is not in contact with the electronic device main body in the area where the plurality of operation buttons 13 are mounted. Thus, the cover 20 is not brought into contact with the operation buttons 13 even when the cover 20 is pressed toward the scientific calculator 10. As a result, it is possible to prevent the instability of the force of pressing the cover 20 and the amount of deflection of the cover 20 at the time of elastic deformation, the instability being caused by the movement of the operation buttons 13 in the back direction with a reaction force being added to the cover 20 when the cover 20 is pressed toward the scientific calculator 10. That is, the ease of removal of the cover 20 when the cover 20 is attached onto the front side of the scientific calculator 10 can be appropriate.

In the electronic device 100 according to the present embodiment, the cover 20 and the electronic device main body (scientific calculator 10) are in contact at the central part in the longitudinal direction at the both ends in the left-right direction where the operation buttons 13 are not mounted when the cover 20 is attached onto the front side of the electronic device main body (scientific calculator 10) in the second state. Thus, the cover 20 is not brought into contact with the operation buttons 13 even when the cover 20 is pressed toward the scientific calculator 10. As a result, it is possible to prevent the instability of the force of pressing the cover 20 and the amount of deflection of the cover 20 at the time of elastic deformation, the instability being caused by the movement of the operation buttons 13 in the back direction with a reaction force being added to the cover 20 when the cover 20 is pressed toward the scientific calculator 10. That is, the ease of removal of the cover 20 when the cover 20 is attached onto the front side of the scientific calculator 10 can be appropriate.

In the electronic device 100 according to the present embodiment, in the second state, the cover 20 is first brought into contact with any part of the electronic device main body (scientific calculator 10) when the cover 20 is pressed toward the electronic device main body (scientific calculator 10) at the central part in the longitudinal direction to be elastically deformed from the first state. Thus, as the area where the cover 20 and the electronic device main body are first brought into contact is where the operation buttons 13 are not mounted, the cover 20 and the operation buttons 13 are not in contact in the second state. That is, it is possible to prevent the instability of the force of pressing the cover 20 and the amount of deflection of the cover 20 at the time of elastic deformation, the instability being caused by the movement of the operation buttons 13 in the back direction with a reaction force being added to the cover 20 when the cover 20 is pressed toward the scientific calculator 10.

In the electronic device 100 according to the present embodiment, the gap between the distance W1 of the first gap A and the distance W2 of the second gap B is equal to or smaller than 40% with respect to the average value of the distance W1 of the first gap A and the distance W2 of the second gap B. As a result, the amount of deflection at the time of elastic deformation of the cover 20 pressed toward the scientific calculator 10 is unchanged between when the cover 20 is attached onto the back side of the scientific calculator 10 and when the cover 20 is attached onto the front side of the scientific calculator 10. Therefore, the ease of removal of the cover 20 is substantially equal between when the cover 20 is attached onto the back side of the scientific calculator 10 and when the cover 20 is attached onto the front side of the scientific calculator 10, and the ease of removal of the cover 20 from the scientific calculator 10 can be appropriate.

In the electronic device 100 according to the present embodiment, when the cover 20 is attached onto the front side of the electronic device main body in the first state, the smallest gap between the cover 20 and the peripheral part of the electronic device main body where the operation buttons 13 are not mounted is in the first range, and the gap between the front of the operation buttons 13 and the cover 20 not pressed is in the second range, where the minimum value of the second range is greater than the maximum value of the first range. Thus, the cover 20 is not brought into contact with the operation buttons 13 even when the cover 20 is pressed toward the scientific calculator 10. As a result, it is possible to prevent the instability of the force of pressing the cover 20 and the amount of deflection of the cover 20 at the time of elastic deformation, the instability being caused by the movement of the operation buttons 13 in the back direction with a reaction force being added to the cover 20 when the cover 20 is pressed toward the scientific calculator 10. That is, the ease of removal of the cover 20 when the cover 20 is attached onto the front side of the scientific calculator 10 can be appropriate.

In the electronic device 100 according to the present embodiment , the distance W1 of the first gap A and/or the distance W2 of the second gap B is determined according to a condition that allows the cover 20 to be removed easily and attached stably, based on the shape of the cover 20 and the shape of the housing of the electronic device main body in a case where the electronic device main body (scientific calculator 10) is an electronic desktop calculator in a standard size and shape. This makes it possible to improve the ease of removal of the scientific calculator 10 from the cover 20 and the stability of attachment of the scientific calculator 10 onto the cover 20.

In the electronic device 100 according to the present embodiment, the gap between the distance W1 of the first gap A and the distance W2 of the second gap B is determined according to a condition that allows the ease of removal of the cover 20 to be substantially equal between when the cover 20 is attached onto the front side of the electronic device main body and when the cover 20 is attached onto the back side of the electronic device main body based on the shape of the cover 20, the hardness of the cover 20, and the shape of the electronic device main body (scientific calculator 10) in a case where the electronic device main body (scientific calculator 10) is an electronic desktop calculator in a standard size and shape and the cover 20 is made of standard materials. As a result, the ease of removal of the cover 20 is substantially equal between when the cover 20 is attached onto the back side of the scientific calculator 10 and when the cover 20 is attached onto the front side of the scientific calculator 10, and the ease of removal of the cover 20 from the scientific calculator 10 can be appropriate.

The embodiments to which the present invention can be applied are not limited to the above-described embodiments, and various modifications can be made without departing from the scope of the present disclosure. For example, the electronic device main body according to the present disclosure is not limited to the scientific calculator (electronic desktop calculator), and the present disclosure may be applied to electronic devices in general the main face of which is protected by a cover.

Although one or more embodiments have been described, the scope of the present invention is not limited to the embodiments and includes the scope of claims below and the scope of their equivalents.

## Claims

1. An electronic device (100) comprising:
an electronic device main body (10); and
a cover (20) that can be attached selectively onto a front side or back side of the electronic device main body (10),
wherein the electronic device main body (10) includes a stopper (15a) on each of lateral faces at both ends in a longitudinal direction,
wherein the cover (20) includes, at each of both ends in the longitudinal direction, an engaging part (22) that engages with the stopper (15a), in a first state where there is a first gap (A) between the cover (20) and the electronic device main body (10) at a central part in the longitudinal and width direction, while the cover (20) is not elastically deformed by being pressed, when the cover (20) is attached onto the back side of the electronic device main body (10), and a second gap (B) between the cover (20) and the electronic device main body (10) at a central part in the longitudinal direction at both ends in the width direction, while the cover (20) is not elastically deformed by being pressed, when the cover (20) is attached onto the front side of the electronic device main body (10),
**characterized in that**
the first gap and the second gap are formed such that a front-side attachment engagement amount and a back-side attachment engagement amount are substantially equal, the front-side attachment engagement amount being an amount (H2) of engagement of the engaging part (22) and the stopper (15a) when the cover is attached onto the front side of the electronic device main body (10) in a second state where the cover (20) is elastically deformed to be brought into contact with the electronic device main body (10) at the central part in the longitudinal direction of the cover (20), and the back-side attachment engagement amount being an amount (H2) of engagement of the engaging part (22) and the stopper (15) when the cover is attached onto the back side of the electronic device main body in the second state where the cover (20) is elastically deformed to be brought into contact with the electronic device main body (10) at the central part in the longitudinal direction of the cover (20).

2. The electronic device (100) according to claim 1,
wherein regardless of whether the cover (20) is attached onto the front side of the electronic device main body (10) or the back side of the electronic device main body (10), the amount (H2) of engagement of the stopper (15a) and the engaging part (22) in the second state is smaller than an amount (H1) of engagement of the stopper (15a) and the engaging part (22) in the first state.

3. The electronic device (100) according to claim 1 or 2,
wherein a first distance (W1) of thr first gap (A) and a second distance (W2) of the second gap (B) are substantially equal, the first distance being measured at a position where the first gap is smallest, and the second distance being measured at a position where the second gap is smallest.

4. The electronic device according to claim 3,
wherein the electronic device main body (10) includes a plurality of operation buttons (13) on the front side,
wherein the second gap (B) is formed in an area where the plurality of operation buttons (13) is not mounted,
wherein when the cover (20) is attached onto the front side of the electronic device main body (10) in the second state, the cover (20) is in contact with the electronic device main body (10) in the area where the plurality of operation buttons (13) is not mounted, and the cover (20) is not in contact with the electronic device main body (10) in an area where the plurality of operation buttons (13) is mounted.

5. The electronic device according to claim 3 or 4,
wherein the first gap (A) is formed at a central part in a left-right direction of the electronic device main body (10),
wherein the second gap (B) is formed at both ends in the left-right direction of the electronic device main body (10).

6. The electronic device according to any one of claims 1 to 5,
wherein a degree of curving of the electronic device main body (10) at both ends in a left-right direction of the electronic device main body (10) is greater on the front side than the back side,
wherein a degree of curving of the cover (20) at both ends in the left-right direction of the cover (20) is equal to or smaller than the degree of the curving of the electronic device main body (10) at the both ends in the left-right direction of the electronic device main body (10) on the back side.

7. The electronic device according to any one of claims 1 to 6,
wherein the cover (20) includes an extending part (21) that covers each of the lateral faces of the electronic device main body (10) at least partially,
wherein the engaging part (22) is provided at a tip of the extending part (21).

8. The electronic device according to any one of claims 1 to 7,
wherein when the cover (20) is attached onto the electronic device main body (10) in the second state, the electronic device main body (10) is in contact with the cover (20) at the central part in the longitudinal direction at both ends in a left-right direction of the electronic device main body.

9. The electronic device according to any one of claims 1 to 7,
wherein in the second state, the cover 20 is brought into contact first with any part of the electronic device main body (10) when the cover (20) is pressed toward the electronic device main body (10) at the central part in the longitudinal direction to be elastically deformed from the first state.

10. The electronic device according to any one of claims 3 to 5,
wherein the first distance (W1) of the first gap (A) and/or the second distance (W2) of the second gap (B) is determined according to a condition that allows the cover (20) to be removed easily and attached stably, based on a shape of the cover (20) and a shape of a housing of the electronic device main body (10).

11. The electronic device according to any one of claims 3 to 5,
wherein a difference between the first distance (W1) of the first gap (A) and the second distance (W2) of the second gap (B) are determined according to a condition that allows the cover 20 to be removed when the cover 20 is attached onto the front side of the electronic device main body (10) as easily as when the cover 20 is attached onto the back side of the electronic device main body (10), based on a shape of the cover (20), a hardness of the cover (20), and a shape of a housing of the electronic device main body (10).

## Patentansprüche

1. Eine elektronische Vorrichtung (100), umfassend:
einen Hauptkörper (10) der elektronischen Vorrichtung; und
eine Abdeckung (20), die selektiv auf einer Vorderseite oder Rückseite des Hauptkörpers (10) der elektronischen Vorrichtung angebracht werden kann,
wobei der Hauptkörper (10) der elektronischen Vorrichtung an jeder von Seitenflächen an beiden Enden in einer Längsrichtung einen Anschlag (15a) enthält,
wobei die Abdeckung (20) an jedem der beiden Enden in der Längsrichtung einen Eingriffsteil (22) enthält, der mit dem Anschlag (15a) in Eingriff kommt, in einem ersten Zustand, in dem ein erster Spalt (A) zwischen der Abdeckung (20) und dem Hauptkörper (10) der elektronischen Vorrichtung an einem mittleren Teil in der Längs- und Breitenrichtung vorhanden ist, während die Abdeckung (20) nicht durch Drücken elastisch verformt ist, wenn die Abdeckung (20) auf der Rückseite des Hauptkörpers (10) der elektronischen Vorrichtung angebracht ist, und ein zweiter Spalt zwischen der Abdeckung (20) und dem Hauptkörper (10) der elektronischen Vorrichtung an einem mittleren Teil in der Längsrichtung an beiden Enden in der Breitenrichtung vorhanden ist, während die Abdeckung (20) nicht elastisch durch Drücken verformt ist, wenn die Abdeckung (20) auf der Vorderseite des Hauptkörpers (10) der elektronischen Vorrichtung angebracht ist,
**dadurch gekennzeichnet, dass** der erste Spalt und der zweite Spalt so ausgebildet sind, dass ein vorderseitiger Anbringungseingriffsbetrag und ein rückseitiger Anbringungseingriffsbetrag im Wesentlichen gleich sind, wobei der vorderseitige Anbringungseingriffsbetrag ein Betrag (H2) des Eingriffs des Eingriffsteils (22) und des Anschlags (15a) entspricht, wenn die Abdeckung an der Vorderseite des Hauptkörpers (10) der elektronischen Vorrichtung in einem zweiten Zustand angebracht wird, in dem die Abdeckung (20) elastisch verformt ist, um mit dem Hauptkörper (10) der elektronischen Vorrichtung an dem mittleren Teil in der Längsrichtung der Abdeckung (20) in Kontakt zu kommen, und der rückseitige Anbringungseingriffsbetrag ein Betrag (H2) des Eingriffs des Eingriffsteils (22) und des Anschlags (15) ist, wenn die Abdeckung in dem zweiten Zustand, in dem die Abdeckung (20) elastisch verformt ist, um mit dem Hauptkörper (10) der elektronischen Vorrichtung an dem mittleren Teil in der Längsrichtung der Abdeckung (20) in Kontakt zu kommen, auf der Rückseite des Hauptkörpers (10) der elektronischen Vorrichtung angebracht ist.

2. Die elektronische Vorrichtung (100) gemäß Anspruch 1,
wobei unabhängig davon, ob die Abdeckung (20) auf der Vorderseite des Hauptkörpers (10) der elektronischen Vorrichtung oder auf der Rückseite des Hauptkörpers (10) der elektronischen Vorrichtung angebracht ist, ist der Eingriffsbetrag (H2) des Anschlags (15a) und des Eingriffsteils (22) im zweiten Zustand kleiner als ein Eingriffsbetrag (H1) des Anschlags (15a) und des Eingriffsteils (22) im ersten Zustand.

3. Die elektronische Vorrichtung (100) geäß Anspruch 1 oder 2,
wobei ein erster Abstand (W1) des ersten Spalts (A) und ein zweiter Abstand (W2) des zweiten Spalts (B) im Wesentlichen gleich sind, wobei der erste Abstand an einer Position gemessen wird, an der der erste Spalt am kleinsten ist, und der zweite Abstand an einer Position gemessen wird, an der der zweite Spalt am kleinsten ist.

4. Die elektronische Vorrichtung gemäß Anspruch 3,
wobei der Hauptkörper (10) der elektronischen Vorrichtung eine Vielzahl von Bedienknöpfen (13) auf der Vorderseite enthält,
wobei der zweite Spalt (B) in einem Bereich ausgebildet ist, in dem die Vielzahl von Bedienknöpfen (13) nicht angebracht ist,
wobei, wenn die Abdeckung (20) im zweiten Zustand auf der Vorderseite des Hauptkörpers (10) der elektronischen Vorrichtung angebracht ist, die Abdeckung (20) mit dem Hauptkörper (10) der elektronischen Vorrichtung in dem Bereich in Kontakt steht, in dem die Vielzahl von Bedienknöpfen (13) nicht montiert ist, und die Abdeckung (20) mit dem Hauptkörper (10) der elektronischen Vorrichtung in einem Bereich nicht in Kontakt steht, in dem die Vielzahl von Bedienknöpfen (13) montiert ist.

5. Die elektronische Vorrichtung gemäß Anspruch 3 oder 4,
wobei der erste Spalt (A) an einem mittleren Teil in einer links-rechts-Richtung des Hauptkörpers (10) der elektronischen Vorrichtung ausgebildet ist,
wobei der zweite Spalt (B) an beiden Enden in der links-rechts-Richtung des Hauptkörpers (10) der elektronischen Vorrichtung ausgebildet ist.

6. Die elektronische Vorrichtung gemäß einem der Ansprüche 1 bis 5,
wobei ein Krümmungsgrad des Hauptkörpers (10) der elektronischen Vorrichtung an beiden Enden in einer links-rechts-Richtung des Hauptkörpers (10) der elektronischen Vorrichtung auf der Vorderseite größer ist als auf der Rückseite,
wobei ein Krümmungsgrad der Abdeckung (20) an beiden Enden in der links-rechts-Richtung der Abdeckung (20) gleich oder kleiner als der Krümmungsgrad des Hauptkörpers (10) der elektronischen Vorrichtung an den beiden Enden in der links-rechts-Richtung des Hauptkörpers (10) der elektronischen Vorrichtung auf der Rückseite ist.

7. Die elektronische Vorrichtung nach einem der Ansprüche 1 bis 6,
wobei die Abdeckung (20) einen Erstreckungsteil (21) enthält, der jede der Seitenflächen des Hauptkörpers (10) der elektronischen Vorrichtung zumindest teilweise abdeckt,
wobei der Eingriffsteil (22) an einer Spitze des Erstreckungsabschnitts (21) vorgesehen ist.

8. Die elektronische Vorrichtung gemäß einem der Ansprüche 1 bis 7,
wobei, wenn die Abdeckung (20) im zweiten Zustand am Hauptkörper (10) der elektronischen Vorrichtung angebracht ist, der Hauptkörper (10) der elektronischen Vorrichtung am mittleren Teil in der Längsrichtung an beiden Enden in einer links-rechts-Richtung des Hauptkörpers der elektronischen Vorrichtung mit der Abdeckung (20) in Kontakt steht.

9. Die elektronische Vorrichtung geäß einem der Ansprüche 1 bis 7,
wobei im zweiten Zustand die Abdeckung 20 zuerst mit einem Teil des Hauptkörpers (10) der elektronischen Vorrichtung in Kontakt gebracht wird, wenn die Abdeckung (20) am mittleren Teil in der Längsrichtung in Richtung des Hauptkörpers (10) der elektronischen Vorrichtung gedrückt wird, um aus dem ersten Zustand elastisch verformt zu werden.

10. Die elektronische Vorrichtung gemäß einem der Ansprüche 3 bis 5,
wobei der erste Abstand (W1) des ersten Spalts (A) und/oder der zweite Abstand (W2) des zweiten Spalts (B) entsprechend einer Bedingung bestimmt wird, die es ermöglicht, die Abdeckung (20) leicht zu entfernen und stabil anzubringen, basierend auf einer Form der Abdeckung (20) und einer Form eines Gehäuses des Hauptkörpers (10) der elektronischen Vorrichtung.

11. Die elektronische Vorrichtung gemäß einem der Ansprüche 3 bis 5,
wobei eine Differenz zwischen dem ersten Abstand (W1) des ersten Spalts (A) und dem zweiten Abstand (W2) des zweiten Spalts (B) gemäß einer Bedingung bestimmt wird, die es ermöglicht, die Abdeckung 20 zu entfernen, wenn die Abdeckung 20 auf der Vorderseite der elektronischen Vorrichtung (10) angebracht ist, ebenso einfach, wie bei der Anbringung der Abdeckung 20 auf der Rückseite des Hauptkörpers (10) der elektronischen Vorrichtung, basierend auf einer Form der Abdeckung (20), einer Härte der Abdeckung (20) und einer Form eines Gehäuses des Hauptkörpers (10) der elektronischen Vorrichtung.

## Revendications

1. Dispositif électronique (100) comprenant:
un corps principal de dispositif électronique (10); et
un couvercle (20) pouvant être fixé de manière sélective sur une face avant ou une face arrière du corps principal (10) du dispositif électronique,
dans lequel le corps principal (10) du dispositif électronique comprend un dispositif d'arrêt (15a) sur chacune des faces latérales aux deux extrémités dans le sens longitudinal,
dans lequel le couvercle (20) comprend, à chacune des deux extrémités dans la direction longitudinale, une partie d'engagement (22) qui s'engage avec la butée (15a), dans un premier état où il existe un premier espace (A) entre le couvercle (20) et le corps principal (10) du dispositif électronique au niveau d'une partie centrale dans la direction longitudinale et dans la direction de la largeur, tandis que le couvercle (20) n'est pas déformé élastiquement par pression, lorsque le couvercle (20) est fixé sur la face arrière du corps principal (10) du dispositif électronique, et un second espace (B) entre le couvercle (20) et le corps principal (10) du dispositif électronique au niveau d'une partie centrale dans la direction longitudinale aux deux extrémités dans la direction de la largeur,
tandis que le couvercle (20) n'est pas déformé élastiquement par pression, lorsque le couvercle (20) est fixé sur la face avant du corps principal (10) de l'appareil électronique,
**caractérisé en ce que** le premier espace et le second espace sont formés de telle sorte que la quantité d'engagement de fixation avant et la quantité d'engagement de fixation arrière soient sensiblement égales, la quantité d'engagement de fixation avant étant une quantité (H2) d'engagement de la partie d'engagement (22) et de la butée (15a) lorsque le couvercle est fixé sur la face avant du corps principal (10) de l'appareil électronique dans un second état dans lequel le couvercle (20) est déformé élastiquement pour être mis en contact avec le corps principal (10) de l'appareil électronique au niveau de la partie centrale dans la direction longitudinale du couvercle (20), et la quantité d'engagement de fixation arrière étant une quantité (H2) d'engagement de la partie d'engagement (22) et de la butée (15) lorsque le couvercle est fixé sur la face arrière du corps principal de l'appareil électronique dans le second état où le couvercle (20) est déformé élastiquement pour être mis en contact avec le corps principal de l'appareil électronique (10) au niveau de la partie centrale dans la direction longitudinale du couvercle (20).

2. Dispositif électronique (100) selon la revendication 1, dans lequel, que le couvercle (20) soit fixé sur la face avant du corps principal (10) du dispositif électronique ou sur la face arrière du corps principal (10) du dispositif électronique, la quantité (H2) d'engagement de la butée (15a) et de la partie d'engagement (22) dans le second état est inférieure à une quantité (H1) d'engagement de la butée (15a) et de la partie d'engagement (22) dans le premier état.

3. Dispositif électronique (100) selon les revendications 1 ou 2, dans lequel une première distance (W1) du premier espace (A) et une seconde distance (W2) du second espace (B) sont sensiblement égales, la première distance étant mesurée à une position où le premier espace est le plus petit, et la seconde distance étant mesurée à une position où le second espace est le plus petit.

4. Dispositif électronique selon la revendication 3, dans lequel le corps principal (10) du dispositif électronique comprend une pluralité de boutons de commande (13) sur la face avant,
dans lequel le second espace (B) est formé dans une zone où la pluralité de boutons de commande (13) n'est pas montée,
dans lequel, lorsque le couvercle (20) est fixé sur la face avant du corps principal (10) du dispositif électronique dans le second état, le couvercle (20) est en contact avec le corps principal (10) du dispositif électronique dans la zone où la pluralité de boutons de commande (13) n'est pas montée, et le couvercle (20) n'est pas en contact avec le corps principal (10) du dispositif électronique dans une zone où la pluralité de boutons de commande (13) est montée.

5. Dispositif électronique selon les revendications 3 ou 4, dans lequel le premier espace (A) est formé au niveau d'une partie centrale dans le sens gauche-droite du corps principal (10) du dispositif électronique,
dans lequel le second espace (B) est formé aux deux extrémités dans la direction gauche-droite du corps principal (10) de l'appareil électronique.

6. Dispositif électronique selon l'une quelconque des revendications 1 à 5, dans lequel le degré de courbure du corps principal (10) du dispositif électronique aux deux extrémités dans le sens gauche-droite du corps principal (10) du dispositif électronique est plus important sur la face avant que sur la face arrière,
dans lequel un degré de courbure du couvercle (20) aux deux extrémités dans la direction gauche-droite du couvercle (20) est égal ou inférieur au degré de courbure du corps principal (10) de l'appareil électronique aux deux extrémités dans la direction gauche-droite du corps principal (10) de l'appareil électronique sur le côté arrière.

7. Dispositif électronique selon l'une quelconque des revendications 1 à 6, dans lequel le couvercle (20) comprend une partie en saillie (21) qui recouvre au moins partiellement chacune des faces latérales du corps principal (10) du dispositif électronique,
dans lequel la partie d'engagement (22) est prévue à une extrémité de la partie en saillie (21).

8. Dispositif électronique selon l'une quelconque des revendications 1 à 7, dans lequel, lorsque le couvercle (20) est fixé sur le corps principal (10) du dispositif électronique dans le second état, le corps principal (10) du dispositif électronique est en contact avec le couvercle (20) au niveau de la partie centrale dans la direction longitudinale aux deux extrémités dans la direction gauche-droite du corps principal du dispositif électronique.

9. Dispositif électronique selon l'une quelconque des revendications 1 à 7, dans lequel, dans le second état, le couvercle (20) est d'abord mis en contact avec une partie quelconque du corps principal (10) du dispositif électronique lorsque le couvercle (20) est comprimé vers le corps principal (10) du dispositif électronique au niveau de la partie centrale dans la direction longitudinale afin d'être déformé élastiquement par rapport au premier état.

10. Dispositif électronique selon l'une quelconque des revendications 3 à 5, dans lequel la première distance (W1) du premier espace (A) et/ou la seconde distance (W2) du second espace (B) sont déterminées en fonction d'une condition qui permet au couvercle (20) d'être retiré facilement et fixé de manière stable, sur la base d'une forme du couvercle (20) et d'une forme d'un boîtier du corps principal (10) du dispositif électronique. (10).

11. Dispositif électronique selon l'une quelconque des revendications 3 à 5,
dans lequel une différence entre la première distance (W1) du premier espace (A) et la deuxième distance (W2) du deuxième espace (B) est déterminée selon une condition qui permet au couvercle 20 d'être retiré lorsque le couvercle 20 est fixé sur la face avant du corps principal (10) de l'appareil électronique aussi facilement que lorsque le couvercle 20 est fixé sur la face arrière du corps principal (10) de l'appareil électronique (10), en fonction de la forme du couvercle (20), de la dureté du couvercle (20) et de la forme du boîtier du corps principal (10) de l'appareil électronique.
